# EUROPÄISCHE PATENTANMELDUNG

(11) **EP 1 189 452 A2**
(43) Veröffentlichungstag der Anmeldung: **20.03.2002**
(21) Anmeldenummer: 01119546.8
(22) Anmeldetag: 14.08.2001
(51) Int. Cl.: H04N 7/50

(54) **Verfahren und Vorrichtung zum Codieren und Dekodieren eines digitalisierten Bildes**

(30) Priorität: 13.09.2000 DE 10045247
(71) Anmelder: SIEMENS AKTIENGESELLSCHAFT, 80333 München (DE)
(72) Erfinder: Buschmann, Ralf, Dr., 85635 Hoehenkirchen-Siegertsbr. (DE)

(57) **Zusammenfassung**

Es wird nicht die diskrete Cosinus Transformation des Prädiktionsfehlers berechnet, sondern es werden die DCT vom zu übertragenden Originalbild und die DCT vom zeitlich vorangegangenen rekonstruierten Bild getrennt voneinander berechnet. Durch Vergleich der Amplituden der Koeffizienten vom Originalsignal zu der Differenz der Koeffizienten vom Originalsignal und rekonstruierten Bild wird für jeden Koeffizienten entschieden, ob der Koeffizient des Originalsignals oder die Differenz der Koeffizienten übertragen wird.

## Beschreibung

Die Erfindung betrifft Verfahren und Vorrichtungen zum Codieren und Decodieren eines digitalisierten Originalbildes bzw. eines digitalisierten codierten Bildes.

Solche Verfahren und solche Vorrichtungen sind aus [1] bekannt.

Bei dem bekannten, standardisierten MPEG2-Verfahren wird zum Komprimieren digitaler Bewegtbildsequenzen, das heißt zum Codieren digitalisierter Bilder, Bildpunkten, welche üblicherweise in Bildblöcke oder in Bildobjekte gruppiert sind, Codierungsinformation zugeordnet.

Unter Codierungsinformation ist im weiteren beispielsweise Helligkeitsinformation (Luminanzinformation) und/oder Farbinformation (Chrominanzinformation), die den Bildpunkten eines digitalisierten Bildes zugeordnet sind, zu verstehen.

Die Codierungsinformation, die ursprünglich im Ortsbereich vorliegt, wird gemäß MPEG2 einer **D**iskreten **C**osinus **T**ransformation (DCT) unterzogen und die auf diese Weise erzeugten DCT-Koeffizienten werden quantisiert und entropiecodiert.

Aus den quantisierten DCT-Koeffizienten wird mittels einer inversen Quantisierung und einer **i**nversen **D**iskreten **C**osinus **T**ransformation (IDCT) ein Rekonstruktionsbild ermittelt.

In diesem Zusammenhang wird eine Bewegungsschätzung zwischen dem Originalbild und einem zeitlich vorangegangenen Rekonstruktionsbild durchgeführt.

Zur Codierung, d.h. zur Kompression der zu übertragenden Videodaten wird üblicherweise zwischen einem Inter-Codierungsmodus und einem Intra-Codierungsmodus umgeschaltet.

Im Rahmen des Inter-Codierungsmodus wird der Prädiktionsfehler, der als Ergebnis der Bewegungsschätzung als ein Differenzwert der Codierungsinformation des zu codierenden Bildblocks und der Codierungsinformation des durch die Bewegungsschätzung ermittelten Bildblocks des zeitlich vorangegangenen Bildes ermittelt worden ist, einer DCT unterzogen, quantisiert und einer Entropiecodierung zugeführt.

Im Rahmen des Intra-Codierungsmodus wird ohne Berücksichtigung von Codierungsinformation zeitlich vorangegangener Bilder die Codierungsinformation des zu codierenden Originalbildes einer DCT unterzogen und die sich ergebenden DCT-Koeffizienten werden quantisiert und entropiecodiert.

Je nach verfügbarer Datenrate wird dabei eine grobe oder eine feine Quantisierung der DCT-Koeffizienten gewählt, d.h. eingestellt.

Je gröber die Quantisierung der DCT-Koeffizienten gewählt ist, desto mehr DCT-Koeffizienten werden zu dem Wert "Null" quantisiert und um so geringer ist die zur Übertragung des codierten Originalbildes benötigte Datenrate.

Häufig wird zur Übertragung des Prädiktionsfehlers eine geringere Datenrate benötigt als zur Übertragung der gemäß dem Intra-Codierungsmodus codierten DCT-Koeffizienten des zu codierenden Originalbildes.

Ist jedoch die Bewegungsschätzung ungenau, was insbesondere häufig an den Grenzen bewegter Objekte oder an Blockgrenzen zwischen jeweils zwei Bildblöcken zu beobachten ist, kann die Datenrate für den Prädiktionsfehler aber auch höher sein als die zur Codierung des Originalbildes benötigte Datenrate.

Aus diesem Grund ist häufig bei bekannten Codierungsverfahren eine Umschaltung zwischen dem Inter-Codierungsmodus und dem Intra-Codierungsmodus vorgesehen, mit der gewährleistet werden soll, dass immer dasjenige Signal übertragen wird, das insgesamt die niedrigere Datenrate zu dessen Übertragung erfordert.

Als Kriterium für die Entscheidung, ob eine Codierung gemäß dem Inter-Codierungsmodus oder gemäß dem Intra-Codierungsmodus durchgeführt werden soll, dient üblicherweise die Signalvarianz. Diese wird aus dem Originalbild direkt, das heißt im Ortsbereich berechnet. Alternativ könnte sie auch durch Summieren der ermittelten DCT-Koeffizienten, das heißt im Frequenzbereich, berechnet werden. Das Signal mit der geringeren Summe der DCT-Koeffizienten hat die geringere Signalvarianz.

Ferner ist es bekannt, dass die bewegungskompensierende Prädiktion üblicherweise die niederfrequenten Signalanteile eines Videosignals gut prädiziert.

Die entsprechenden DCT-Koeffizienten niederfrequenter Signalanteile des jeweiligen zu codierenden Originalbildes haben demnach eine geringere Amplitude als die DCT-Koeffizienten des Original-Signals. Aufgrund von Schätzfehlern im Rahmen der Bewegungsschätzung werden die hochfrequenten Signalanteile jedoch häufig nur mit ungenügender Qualität prädiziert, so dass die DCT-Koeffizienten des Prädiktionsfehlers, die im weiteren als Prädiktionskoeffizienten bezeichnet werden, in diesem Fall eine höhere Amplitude aufweisen als die DCT-Koeffizienten des Originalbildes.

Der Erfindung liegt somit das Problem zugrunde, ein digitalisiertes Bild zu codieren bzw. zu decodieren, welches gegenüber bekannten Codierungsverfahren eine geringere Übertragungsrate zu dessen Übertragung benötigt.

Das Problem wird durch die Verfahren und die Vorrichtungen zum Codieren bzw. Decodieren eines digitalisierten Originalbildes bzw. eines digitalisierten codierten Bildes mit den Merkmalen gemäß den unabhängigen Patentansprüchen gelöst.

Bei einem Verfahren zum Codieren eines digitalisierten Originalbildes mit Bildpunkten, denen Codierungsinformation zugeordnet ist, werden Spektralkoeffizienten der Codierungsinformation des Originalbildes ermittelt. Ferner werden Spektralkoeffizienten eines Rekonstruktionsbildes eines zeitlich vorangegangenen Bildes ermittelt. Für zumindest einen Teil der ermittelten Spektralkoeffizienten werden Koeffizientendifferenzen aus Spektralkoeffizienten des Originalbildes und der entsprechenden Spektralkoeffizienten des Rekonstruktionsbildes ermittelt. Durch Bilden der jeweiligen Differenz eines Spektralkoeffizienten des Originalbildes und des entsprechenden Spektralkoeffizienten des Rekonstruktionsbildes wird jeweils ein Prädiktionskoeffizient gebildet. Die ermittelten Prädiktionskoeffizienten werden mit entsprechenden Spektralkoeffizienten des Originalbildes verglichen. Zumindest teilweise wird der jeweils kleinere Koeffizient ausgewählt und codiert.

Anschaulich kann die Erfindung darin gesehen werden, dass selektiv auf der Abstraktionsebene der einzelnen Spektralkoeffizienten des Originalbildes, welches zu codieren ist und eines rekonstruierten Bildes eines zeitlich vorangegangenen Bildes, jeweils derjenige Spektralkoeffizient ausgewählt und übertragen wird, dessen Spektralkoeffizient einen kleineren Wert aufweist, das heißt der eine geringere spektrale Leistungsdichte aufweist.

Es wird somit nicht wie gemäß dem Stand der Technik eine DCT des Prädiktionsfehlers ermittelt, sondern es wird sowohl eine Spektraltransformation auf das zu codierende Originalbild als auch auf das rekonstruierte Bild eines zeitlich vorangegangenen Bildes getrennt berechnet und aufgrund eines Vergleichs der Amplitude der Koeffizienten des Originalsignals zu der Differenz der Koeffizienten vom Originalsignal und dem rekonstruierten Bild kann für jeden Koeffizienten separat entschieden werden, welcher im Rahmen der Codierung des Bildes ausgewählt, codiert und übertragen wird. In diesem Fall wird dem Empfänger zusätzlich die getroffene Entscheidung signalisiert.

Auf diese Weise wird eine erhebliche Reduktion der benötigten Datenrate zur Codierung und Übertragung eines digitalisierten Bildes in einer Bewegtbildsequenz erzielt.

Als Codierungsinformation kann beispielsweise Helligkeitsinformation und/oder Farbinformation den Bildpunkten zugeordnet sein.

Gemäß einer Ausgestaltung der Erfindung ist es vorgesehen, dass nur die Prädiktionskoeffizienten mit dem Wert Null ausgewählt und codiert werden.

Weist ein Prädiktionskoeffizient einen Wert ungleich Null auf, so wird gemäß einer Weiterbildung der Erfindung der entsprechende, das heißt an dem entsprechenden Ort innerhalb des Bildes sich befindende Spektralkoeffizient des Originalbildes ausgewählt und codiert.

Gemäß dieser Ausgestaltung ist eine sehr einfache und somit mit sehr geringem Rechenzeitbedarf durchführbare Codierung mit verbesserter Codiereffizienz erreicht.

Gemäß einer weiteren Ausgestaltung der Erfindung ist es vorgesehen, für alle Koeffizienten des zu codierenden Originalbildes einen Vergleich auf die oben beschriebene Weise durchzuführen und den jeweils geeigneten Koeffizienten auszuwählen und zu codieren, wobei ein Koeffizient geeignet ist, wenn die Auswahl zu einer niedrigeren Datenmenge für den Koeffizienten und die Auswahlinformation führt.

Zum Bilden von Spektralkoeffizienten kann gemäß einer weiteren Ausgestaltung der Erfindung eine Diskrete Cosinus Transformation verwendet werden, wodurch DCT-Koeffizienten gebildet werden.

Um auf einfache Weise eine Decodierung des codierten Bildes zu ermöglichen, wird für jede getroffene Auswahl eine Auswahlentscheidungsangabe beispielsweise in Form eines Bits, mit dem jeweils angegeben wird, ob ein Prädiktionskoeffizient oder ein Spektralkoeffizient des Originalbildes ausgewählt und codiert wurde, gespeichert und an einen Decoder zu dessen Decodierung übertragen.

Die Auswahlentscheidungsangaben können beispielsweise in einem Auswahlentscheidungsvektor der Dimension der übertragenen Koeffizienten erfolgen. Der Auswahlentscheidungsvektor wird auf geeignete Weise codiert und übertragen.

Bei einem Verfahren zum Decodieren eines digitalisierten codierten Bildes mit Spektralkoeffizienten, Prädiktionskoeffizienten und Auswahlentscheidungsangaben, mit denen jeweils angegeben ist, ob der jeweilige Koeffizient ein Spektralkoeffizient des Originalbildes oder des Prädiktionsfehlerbildes ist, werden für ein zeitlich vorangegangenes Rekonstruktionsbild Spektralkoeffizienten gebildet.

Das codierte Bild wird unter Berücksichtigung der Spektralkoeffizienten, Prädiktionskoeffizienten und Auswahlentscheidungsangaben des codierten Bildes und dem Spektralkoeffizienten des zeitlich vorangegangenen Rekonstruktionsbildes decodiert.

Entsprechende Vorrichtungen zum Durchführen der oben beschriebenen Verfahren weisen jeweils zumindest einen Prozessor auf, der derart eingerichtet ist, dass die oben dargestellten Verfahrensschritte durchgeführt werden.

Die Erfindung kann sowohl mittels einer speziellen elektrischen Schaltung, das heißt in Hardware, als auch mittels eines Computerprogramms, das heißt in Software, realisiert werden.

Die Erfindung kann allgemein in jedem blockbasierten und/oder objektbasierten Verfahren zum Codierung und Decodieren eines digitalisierten Bildes, insbesondere einer Folge von digitalisierten Bildern, das heißt einer Bewegtbildsequenz, eingesetzt werden, bei dem eine bewegungskompensierende Prädiktion, insbesondere eine Bewegungsschätzung und eine Bewegungskompensation, eingesetzt wird.

Ein Ausführungsbeispiel der Erfindung ist in den Figuren dargestellt und wird im weiteren näher erläutert.

Es zeigen
- Figur 1: ein Blockdiagramm, in dem eine Vorrichtung zum Codieren einer Bewegtbildsequenz gemäß einem Ausführungsbeispiel der Erfindung dargestellt ist;
- Figur 2: ein Blockdiagramm, in dem ein Videokommunikationssystem mit einer Kamera, einem Codierer und einem Decodierer gemäß einem Ausführungsbeispiel der Erfindung dargestellt ist;

- Figur 3: ein Blockdiagramm, in dem eine Decodiervorrichtung zum Decodieren eines codierten Videodatenstroms gemäß einem Ausführungsbeispiel der Erfindung dargestellt ist.

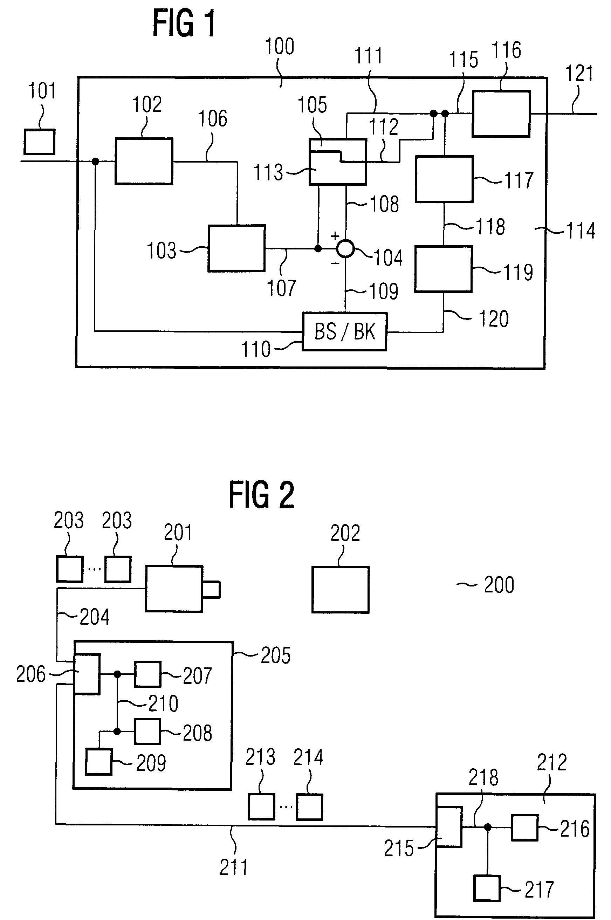

**Fig.2** zeigt ein Videokommunikationssystem 200 mit einer Kamera 201, mit der eine Szene mittels einer Folge 203 zeitlich aufeinander folgender Bilder aufgenommen wird.

Die Szene 202 weist eine beliebige Anzahl unterschiedlicher Objekte auf.

Die aufgenommene Folge 203 von Bildern wird von der Kamera 201 über eine erste Kommunikationsverbindung 204, beispielsweise ein Kabel oder eine Funkverbindung, einer Codierungsvorrichtung 205 zugeführt.

Nach Empfang der Bilder 203 über eine Eingangs-/Ausgangs-Schnittstelle 206 durch die Codiervorrichtung 205 werden die Bilder von einem Analog-Digital-Wandler 207 der Codiervorrichtung 205 digitalisiert und die digitalisierten Bilder werden in einem Speicher 208 gespeichert.

Weiterhin weist die Codiervorrichtung 205 einen Prozessor 209 auf, der derart eingerichtet ist, dass die im weiteren beschriebenen Verfahrensschritte durchführbar sind.

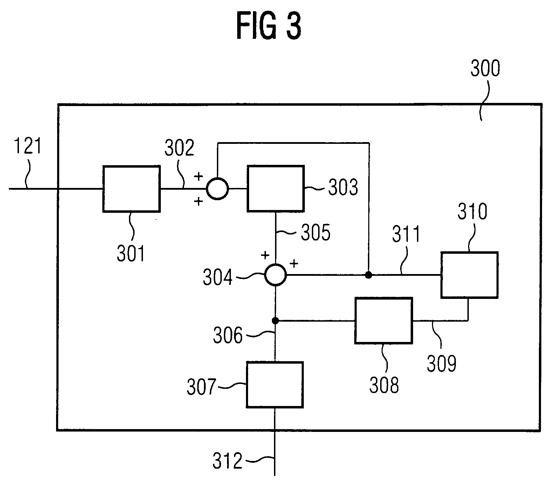

Die logischen Komponenten, die im Rahmen des Codierens bzw. Decodierens gemäß dem Ausführungsbeispiel erforderlich sind, sind in den **Fig.1** und **Fig.3** dargestellt und werden im weiteren detailliert erläutert.

Die Funktionalität dieser einzelnen Komponenten sind gemäß dem Ausführungsbeispiel als Programm in dem Speicher 208 der Codiervorrichtung oder in einem Speicher der im weiteren beschriebenen Decodiervorrichtung gespeichert und werden von dem Prozessor 209 der Codiervorrichtung 205 bzw. der Decodiervorrichtung, wie im weiteren näher erläutert, ausgeführt.

Die einzelnen Komponenten der Codiervorrichtung 205 sind über einen Computerbus 210 miteinander gekoppelt.

Die Codiervorrichtung 205 ist über die Eingabe-/Ausgabe-Schnittstelle 206 und über eine zweite Kommunikationsverbindung 211, beispielsweise eine Funkverbindung oder einer Festnetz-Leitung, das heißt ein Kabel, mit einer Decodiervorrichtung 212 gekoppelt.

Über die zweite Kommunikationsverbindung 211 werden digitalisierte, codierte Videobilder 213 von der Codierungsvorrichtung an die Decodiervorrichtung 212 übertragen.

Die codierten Bilder 213, 214 werden von der Decodiervorrichtung 212 über eine Eingangs-/Ausgangs-Schnittstelle 215 empfangen und in einem Speicher 216 gespeichert.

Weiterhin weist die Decodiervorrichtung 212 einen Prozessor 217 auf, der derart eingerichtet ist, dass die entsprechenden Verfahrensschritte zum Decodieren der codierten Bilder und somit zum Rekonstruieren digitalisierter Bilder durchgeführt werden können.

Die Komponenten der Decodiervorrichtung 212 sind über einen Computerbus 218 miteinander gekoppelt.

**Fig.1** zeigt die logische Struktur der Codiervorrichtung 100, die gemäß diesem Ausführungsbeispiel in Form eines Computerprogramms, welches von dem Prozessor 207 durchgeführt wird, implementiert ist.

Die Codiervorrichtung 100 kann in ihren Komponenten jedoch auch jeweils als eine spezielle elektronische Schaltung auf einer separaten Computerkarte realisiert sein.

Die in Bildblöcke gruppierten Bildpunkte werden als digitalisiertes Bild 101 der Codiervorrichtung 100 zugeführt.

In einer Transformationseinheit 102 wird auf die Bildblöcke eine **D**iskrete **C**osinus **T**ransformation (DCT) durchgeführt.

Ferner werden die Bildpunkte des zu codierenden Originalbildes 101 einer Einheit zur Bewegungsschätzung und Bewegungskompensation 110 zugeführt.

Die von der Transformationseinheit 102 gebildeten DCT-Koeffizienten 106 werden in einem Speicher 103 gespeichert.

Ferner werden die DCT-Koeffizienten des Originalbildes 101 aus dem Speicher 103 ausgelesen und als ausgelesene DCT-Koeffizienten 107 einer Subtraktionseinheit 104 zugeführt.

In der Substraktionseinheit 104 wird von einem ausgelesenen Spektralkoeffizienten 107 des zu codierenden Originalbildes 101 jeweils ein entsprechender von der Einheit zur Bewegungsschätzung und Bewegungskompensation 110 gebildeter Spektralkoeffizient 109 des zeitlich vorangegangenen Bildes, der der entsprechenden Bildposition entspricht, zugeführt.

Die durch Differenzbildung der beiden sich entsprechenden Spektralkoeffizienten des zu codierenden Originalbildes 101 und des zeitlich vorangegangenen Bildes ermittelte Differenz, im weiteren bezeichnet als Differenzkoeffizient 108, wird einer Quantisierungseinheit 113 zugeführt und dort quantisiert.

Ferner werden die Spektralkoeffizienten 107 des zu codierenden Originalbildes 101 ebenfalls der Quantisierungseinheit 113 zugeführt und dort quantisiert.

Die quantisierten Koeffizienten 107, 108 werden einer Entscheidungseinheit 105 zugeführt, beispielsweise einer Einheit zur Bildung des Maximums 105 der der Einheit 105 zur Bildung des Maximums zugeführten Eingangsgrößen.

Der jeweils größere Wert aus dem Spektralkoeffizienten 107 und der Koeffizientendifferenz 108 wird als ausgewählter Koeffizient 111 ausgewählt und codiert.

Zur Auswahl kann alternativ oder zusätzlich in der Entscheidungseinheit 105 die Datenrate für die Signalisierung mit berücksichtigt werden.

Ferner wird der jeweilige ausgewählte quantisierte Koeffizient 115 sowie eine Angabe 112 darüber, ob es sich bei dem quantisierten Koeffizienten um einen Spektralkoeffizienten 107 des Originalbildes oder um den Differenzkoeffizienten 108 handelt (im weiteren bezeichnet als Koeffizientenangabe 112), einer Einheit zur Entropiecodierung 116 zugeführt, wodurch ein codierter Videodatenstrom 121 gebildet wird, der an die Decodiervorrichtung 300, die im weiteren beschrieben wird, übertragen wird.

In einer Rückkoppelschleife 114 werden die ausgewählten und quantisierten Koeffizienten 115 sowie die Koeffizientenangabe 112 einer inversen Quantisierungseinheit 117 zugeführt und dort zu invers quantisierten Koeffizienten 118 umgewandelt.

Die invers quantisierten Koeffizienten 118 werden in einer inversen Transformationseinheit 119 mittels einer inversen **d**iskreten **C**osinus **T**ransformation (IDCT) zu invers codierten Koeffizienten 120 transformiert.

Die invers codierten Koeffizienten 120 werden der Einheit zur Bewegungsschätzung und Bewegungskompensation 110 zugeführt, in der eine übliche Bewegungsschätzung bzw. Bewegungskompensation erfolgt.

Gemäß dieser Vorgehensweise wird somit für jeden zu übertragenden DCT-Koeffizienten überprüft, ob der DCT-Koeffizient des Originalbildes 101 oder des rekonstruierten Bildes, das heißt des Prädiktionsfehlerbildes, übertragen wird, je nach dem, welcher Koeffizient kleiner ist, d.h. einen geringeren Wert aufweist.

**Fig.3** zeigt die Decodiervorrichtung 300, der der codierte Videodatenstrom 121 zugeführt wird.

In einer inversen Quantisierungseinheit 301 werden invers quantisierte Spektralkoeffizienten 302 gebildet, die einer inversen Transformationseinheit 303 zugeführt wird, in der eine inverse diskrete Cosinus Transformation auf die invers quantisierten Koeffizienten 302 durchgeführt wird zur Bildung invers transformierter Koeffizienten 305.

Die invers transformierten Koeffizienten 305 und die Angabe darüber, ob es sich bei den Koeffizienten um Differenzenkoeffizienten oder um Spektralkoeffizienten des Originalbildes handelt, werden einer Additionseinheit 304 zugeführt.

Entsprechend wird entweder ein im weiteren beschriebener rekonstruierter DCT-Koeffizient 311 des zeitlich vorangegangenen Bildes hinzuaddiert oder der rekonstruierte Koeffizient 305 wird einfach als Spektralkoeffizient 306 in einem Speicher 307 gespeichert.

In der Einheit zur Bewegungskompensation 308 wird für den Fall, dass es sich bei dem Koeffizienten 305 um einen Differenzkoeffizienten 108 handelt, eine Bewegungskompensation durchgeführt und das bewegungskompensierte Signal 309 wird einer Transformationseinheit 310 zur Durchführung einer DCT-Transformation zugeführt.

Von der Transformationseinheit 310 werden die gebildeten DCT-Koeffizienten 311 des rekonstruierten Bildes der Additionseinheit 304 zugeführt und für den Fall, dass es sich um einen Differenzkoeffizienten 108 handelt, wird der jeweilige von der Transformationseinheit 310 gebildete DCT-Koeffizient 311 zu dem invers quantisierten Koeffizienten 302 addiert.

Aus dem Speicher 307 wird das dort gespeicherte rekonstruierte Bild als rekonstruiertes Videosignal 312 ausgelesen und dem Benutzer der Decodiervorrichtung 300 beispielsweise über einen Bildschirm dargestellt.

In diesem Dokument ist folgende Veröffentlichung zitiert:

[1] J. De Lameillieure, R. Schäfer, MPEG-2-Bildcodierung für das digitale Fernsehen, Fernseh- und Kino-Technik, 48. Jahrgang, Nr. 3/1994, S. 99 - 107, 1994

## Patentansprüche

1. Verfahren zum Codieien eines digitalisierten Originalbildes mit Bildpunkten, denen Codierungsinformation zugeordnet ist,
• bei dem Spektralkoeffizienten des Originalbildes ermittelt werden,
• bei dem Spektralkoeffizienten eines Rekonstruktionsbildes eines zeitlich vorangegangenen Bildes ermittelt werden,
• bei dem für zumindest einen Teil der ermittelten Spektralkoeffizienten Koeffizientendifferenzen aus Spektralkoeffizienten des Originalbilds und der entsprechenden Spektralkoeffizienten des Rekonstruktionsbildes ermittelt werden, wodurch Prädiktionskoeffizienten gebildet werden,
• bei dem die ermittelten Prädiktionskoeffizienten mit entsprechenden Spektralkoeffizienten des Originalbildes verglichen werden, und
• bei dem zumindest teilweise der jeweils kleinere Koeffizient ausgewählt und codiert wird.

2. Verfahren nach Anspruch 1,
• bei dem nur die quantisierten Prädiktionskoeffizienten mit dem Wert Null ausgewählt und codiert werden, und
• bei dem sonst die Spektralkoeffizienten des Originalbilds ausgewählt und codiert werden oder umgekehrt.

3. Verfahren nach Anspruch 1 oder 2,
bei dem den Bildpunkten als Codierungsinformation Helligkeitsinformation und/oder Farbinformation zugeordnet ist.

4. Verfahren nach einem der Ansprüche 1 bis 3,
bei dem für alle Koeffizienten des zu codierenden Originalbildes der jeweils kleinere Koeffizient ausgewählt und codiert wird.

5. Verfahren nach einem der Ansprüche 1 bis 4,
bei dem als Spektralkoeffizienten DCT-Koeffizienten oder Integer-Transofrmationskoeffizienten gebildet werden.

6. Verfahren nach einem der Ansprüche 1 bis 5,
bei dem für jede Auswahl eines Koeffizienten eine Auswahlentscheidungsangabe gespeichert und an einen Decoder übertragen wird.

7. Verfahren zum Decodieren eines digitalisierten codierten Bildes mit Spektralkoeffizienten, Prädiktionskoeffizienten und Auswahlentscheidungsangaben, mit denen jeweils angegeben ist, ob der jeweilige Koeffizient ein Spektralkoeffizient des Originalbildes oder des Prädiktionsfehlerbildes ist,
• bei dem für ein zeitlich vorangegangenes Rekonstruktionsbild Spektralkoeffizienten gebildet werden, und
• bei dem das codierte Bild decodiert wird unter Berücksichtigung der Spektralkoeffizienten, Prädiktionskoeffizienten und Auswahlentscheidungsangaben des codierten Bildes und den Spektralkoeffizienten des zeitlich vorangegangenen Rekonstruktionsbilds.

8. Vorrichtung zum Codieren eines digitalisierten Originalbildes mit Bildpunkten, denen Codierungsinformation zugeordnet ist,
• mit einer Transformationseinheit, zum Ermitteln von Spektralkoeffizienten des Originalbildes oder eines Rekonstruktionsbildes eines zeitlich vorangegangenen Bildes,
• mit einer Subtraktionseinheit zum Bilden von Koeffizientendifferenzen aus Spektralkoeffizienten des Originalbilds und der entsprechenden Spektralkoeffizienten des Rekonstruktionsbildes, wodurch Prädiktionskoeffizienten gebildet werden,
• mit einer Vergleichseinheit zum Bilden eines Vergleichswerts zwischen den Prädiktionskoeffizienten und entsprechenden Spektralkoeffizienten des Originalbildes, und
• einer Koeffizientenauswahleinheit zum Auswählen des jeweils geeigneten Koeffizienten, und
• einer Codierungseinheit zum Codieren der ausgewählten Koeffizienten.

9. Vorrichtung zum Codieren eines digitalisierten Originalbildes mit Bildpunkten, denen Codierungsinformation zugeordnet ist,
mit einem Prozessor, der derart eingerichtet ist, dass folgende Schritte durchführbar sind:
• Ermitteln von Spektralkoeffizienten des Originalbildes,
• Ermitteln von Spektralkoeffizienten eines Rekonstruktionsbildes eines zeitlich vorangegangenen Bildes,
• Ermitteln von Koeffizientendifferenzen für zumindest einen Teil der ermittelten Spektralkoeffizienten aus Spektralkoeffizienten des Originalbilds und der entsprechenden Spektralkoeffizienten des Rekonstruktionsbildes, wodurch Prädiktionskoeffizienten gebildet werden,
• Vergleichen der ermittelten Prädiktionskoeffizienten mit entsprechenden Spektralkoeffizienten des Originalbildes, und
• zumindest teilweise Auswählen und Codieren des jeweils kleineren Koeffizienten.

10. Vorrichtung zum Decodieren eines digitalisierten codierten Bildes mit Spektralkoeffizienten, Prädiktionskoeffizienten und Auswahlentscheidungsangaben, mit denen jeweils angegeben ist, ob der jeweilige Koeffizient ein Spektralkoeffizient des Originalbildes oder des Prädiktionsfehlerbildes ist,
mit einem Prozessor, der derart eingerichtet ist, dass folgende Schritte durchführbar sind:
• für ein zeitlich vorangegangenes Rekonstruktionsbild werden Spektralkoeffizienten gebildet,
• das codierte Bild wird unter Berücksichtigung der Spektralkoeffizienten, Prädiktionskoeffizienten und Auswahlentscheidungsangaben des codierten Bildes und den Spektralkoeffizienten des zeitlich vorangegangenen Rekonstruktionsbilds decodiert.
